Europäisches Patentamt

(19) European Patent Office

Office européen des brevets

(11) Publication number: **0 130 003**
**B1**

(12) **EUROPEAN PATENT SPECIFICATION**

(45) Date of publication of patent specification: **16.08.89**

(21) Application number: **84303896.9**

(22) Date of filing: **08.06.84**

(51) Int. Cl.⁴: **G 01 N 9/00**

(54) **Electronic circuit for vibrating tube densimeter.**

(30) Priority: **10.06.83 US 503179**

(43) Date of publication of application:
**02.01.85 Bulletin 85/01**

(45) Publication of the grant of the patent:
**16.08.89 Bulletin 89/33**

(84) Designated Contracting States:
**DE FR GB IT**

(56) References cited:
**US-A-3 339 400**
**US-A-3 910 101**
**US-A-3 983 744**
**US-A-4 132 110**
**US-A-4 170 128**

(73) Proprietor: **MICRO MOTION INCORPORATED**
**7070 Winchester Circle**
**Boulder Colorado 80301 (US)**

(72) Inventor: **Ruesch, James R.**
**6941 Harvest Road**
**Boulder Colorado 80301 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

EP 0 130 003 B1

Courier Press, Leamington Spa, England.

# EP 0 130 003 B1

**Description**

The present invention relates to electronically monitoring the mechanical oscillation characteristics of one or more resonantly vibrating tubes through which flowable substances are passing to determine the density of the substances. Both the temperature and natural period of oscillation of one or more resonantly oscillating tubes are electronically monitored, and the resulting signals are processed to accurately determine the density of the flowing substances independent of temperature variations.

It is known that one end of an elastic container can be rigidly mounted and that the other end of the cantilever mounted container can be oscillated at a resonant angular velocity. For such a spring-mass mechanical system, the resonant angular velocity of oscillation can be calculated by taking the square root of the ratio of the oscillating container's mass to its spring constant about the oscillation axis. Since the mass of the container will vary as the density of the substances flowing through the container varies, monitoring the resonant angular velocity of oscillation of a centilever mounted container potentially offers a convenient means for measuring the density of flowable substances.

Various container configurations have been applied to the construction of oscillating container densimeters. Among these has been U-shaped flow tubes, with the tube rigidly mounted to a fixed base at the open ends of the U-shaped flow tube. Thus, by flowing a substance through the U-shaped flow tube and vibrating the tube at its resonant angular velocity the density of substances flowing through the U-shaped flow tube can be measured. A known improvement for the vibrating U-shaped flow tube densimeter is the use of a second cantilever mounted U-shaped flow tube which is positioned along side the first U-shaped flow tube so as to have both U-shaped flow tubes act as the tines of a tuning fork. Among the advantages achieved by such tuning fork operation is substantial attenuation, at the base, of vibration forces associated with the driving of the U-shaped flow tubes at their resonant angular velocities of oscillation.

An additional variable which affects measurements of the density of flowable substances passing through oscillating container densimeters in the temperature of the oscillating container. For, the spring constants of an elastic container are dependent on temperature. This dependency on temperature and its effect on the determination of density by measuring resonant angular velocity of oscillation has been known. Previous attempts to address the dependency of the resonant angular velocity of oscillation on temperature variations have included those disclosed in United States patents 4,170,128 and 3,910,101. Disclosed in United States patent 4,170,128 is a mechanical arrangement incorporating a length of cord or string attached to a vibrating U-shaped flow tube. According to the disclosure in United States patent 4,170,128, the length of the string is dependent on temperature, and, therefore, the tension of the mounted string is varied by temperature. As further disclosed this variation in tension modifies the vibration characteristics of the U-shaped flow tube to compensate for temperature variations. Disclosed in United States patent 3,910,101 from which the preambles of present Claims 1 and 6 have been derived, is an electrical circuit for both monitoring and controlling the oscillation of a fluid filled container. Included as a part of the disclosed circuit is a bridge circuit having as the variable element a temperature dependent sensor. The output of the bridge circuit according to the teachings in United States patent 3,910,101 is used to alter, according to fluctuations in temperature, both the phase and amplitude of the signal driving the oscillation of the fluid filled container.

The disclosures in both United States patents 4,132,110 and 3,910,101 are directed to the monitoring of temperature variations for the purpose of altering the mechanical oscillations of oscillating containers.

United States patent 4,132,110 discloses a mechanical configuration and electrical circuit for determining the density of a fluid passing through an oscillating container without a feedback system for altering the mechanical oscillations of the container as a function of temperature variations. The electrical circuitry disclosed in United States patent 4,132,110 for determining fluid density incorporates an oscillator to generate a standard signal from which is subtracted the signal representative of the motion of the oscillating container. According to the disclosures in United States patent 4,132,110, this difference signal is then combined with the signal from a temperature probe to provide a signal proportional to the density of the fluid being measured based on a reference temperature.

United States patent specification US—A—3983744 discloses a method and apparatus for measuring the density of a dirty fluid in which the fluid is passed through a resonantly oscillating hollow body surrounded by a clean fluid at the same pressure as the dirty fluid. The apparatus and method allow for a compensation to be made electronically for density changes of the clean fluid caused by temperature fluctuations. The compensation is based upon a temperature correction applied following integration of a density input signal. The density signal, being the output signal of a density converter is processed by control logic means to provide a periodic time difference signal between the density signal and a reference signal. The periodic time difference signal is then integrated twice by two integrators which compensate for the non-linear relationship between the density signal and the measured density. The output of the double integrator feeds a sum, sample, and hold circuit which has as a further input, a temperature correction signal.

According to the present invention there is provided an electronic circuit for determining the density of substances flowing through a resonantly oscillating container from the mass of said substances which comprises; a temperature to electric transducer electrically connected to an electric measurement circuit

2

for generating a first electrical signal having a magnitude determined by the temperature of said container; a mechanical to electrical transducer for generating a second electrical signal having a magnitude determined by the measured period of oscillation of said container, and an electronic integrator circuit the output signal of which is proportional to the square of said period of oscillation of said container, characterised in that the output of said electric measurement circuit is electrically connected to the input of said electronic integrator circuit and the output of said mechanical to electrical transducer is electrically connected to an electronic logic circuit the output of which electronic logic circuit is in turn electrically connected to said electronic integrator circuit and the output signals of which act to control the time of integration of said electronic integrator circuit so that said output signal is modified by said first electrical signal, whereby the density of said substances flowing through said container is determined from said output signal.

In a second aspect there is provided a method of determining the density of substances flowing through a resonantly oscillating container from the mass of said substances which comprises separately measuring the temperature of said container and the period of oscillation of said container, characterised in that a first electrical signal is generated from the measured temperature of said container and input to an electronic integrator circuit; a second electrical signal is generated from the measured period of oscillation of said container and input via an electronic logic circuit to said electronic integrator circuit, the time of integration of said electronic integrator circuit is controlled by said electronic logic circuit so that the output signal of said electronic integrator circuit represents the square of said period of oscillation of said container as modified by said first electrical signal, whereby the density of said substances is determined from said output signal.

In order to make precise density measurements using an oscillating container densimeter a relationship must be developed which incorporates not only the reasonant angular velocity of oscillation of the container and the mass of the substance passing through the container, but also the variation in the spring constant about the oscillation axis of the oscillating container. For temperature changes cause variations in the spring constants of elastic materials, and for many practical applications either or both the ambient environment or the flowing substance being measured can produce substantial temperature fluctuations. Therefore, in addition to the resonant angular velocity of oscillation the temperature of the oscillating container must also be measured, and temperature dependent spring constant about the oscillation axis calculated.

It will be shown below that the equation for the density of a substance passing through a resonantly oscillating container is, in general, a relationship where the first term is the oscillating container's spring constant about the oscillation axis, which is a function of temperature, multiplied by the square of the period of oscillation for the oscillating container, with this product being divided by a first constant. The second, and last term of this equation, is a constant which is subtracted from the first term to give a direct calculation of density.

The present invention utilizes this analytical description of the mechanics of an oscillating container densimeter to provide an accurate method and electronic circuitry for directly determining the density of substances passing through the densimeter.

The measurement technique of the present invention is dependent on the outputs of two sensors which are mounted either on or in conjunction with the oscillating container. One of these sensors can be velocity sensor, such as an electrical coil and magnet, which monitors the movement of the container and provides a sinusoidal signal corresponding to such movement. The other sensor can be a temperature variable resistor mounted on the container or in any other isothermal location relative to the container. Obviously, other sensor types could be used as long as (1) a signal is provided which corresponds to the movement of the container so that the resonant period of oscillation can be determined, and (2) a signal is provided which corresponds to the temperature of the container so that the temperature coefficient for the spring constant of the container about the oscillation axis can be determined.

The circuit of the present invention includes in a preferred embodiment two integrators which are connected in series. An input to the first of these integrators is a reference voltage. The outputs of these two integrators are controlled by electronic switches so that the output from the second integrator is a function of the square of the time that the inputted reference voltage is integrated. The duration of time during which the integrators function is determined by the output of the sense coil monitoring the movement of the oscillating container so that the combined output from the integrators is a function of the square of the resonant period of oscillation of the container. Controlling the reference voltage inputted to the first integrator is a circuit incorporating a bridge, one arm of the bridge being the temperature variable resistor which is mounted on the container so that as the temperature of the container varies the reference voltage is accordingly varied, and, therefore, the output of the integrators represents a product of a temperature dependent function and the square of the period of oscillation of the resonantly oscillating container. By controlling the output of the bridge circuit, an accurate representation of the variation in the spring constant of the container about the oscillation axis as a function of temperature can be provided to the series integrator circuitry. Thus, the output of the integrators after passing through a buffer circuitry gives a direct readout of the density of substances passing through the densimeter.

The various objects, advantages and novel features of the present invention will be more readily apprehended from the following detailed description when read in conjunction with the appended drawings, in which:

Figure 1 is a block diagram of the electrical circuit of the present invention;

Figure 2 is a perspective view of a twin vibrating tube densimeter with both motion and temperature sensors being mounted on the densimeter vibrating tubes; and,

Figure 3 is a graphical presentation of waveforms characteristic of the operation of the invention.

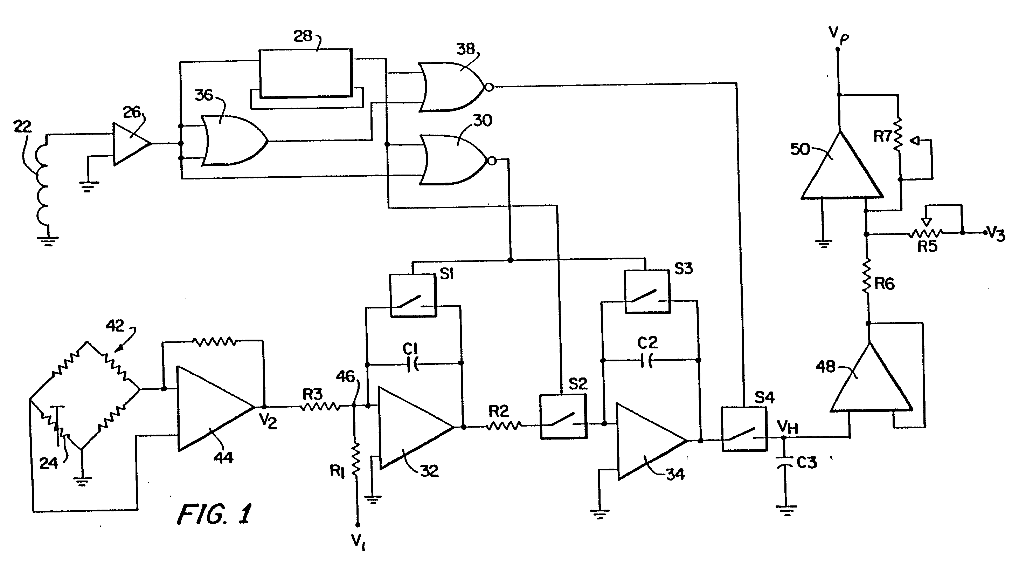

Referring now to the drawings, wherein corresponding components are designated by the same reference numerals throughout the various figures, a block diagram of the circuit of the present invention is shown in Fig. 1.

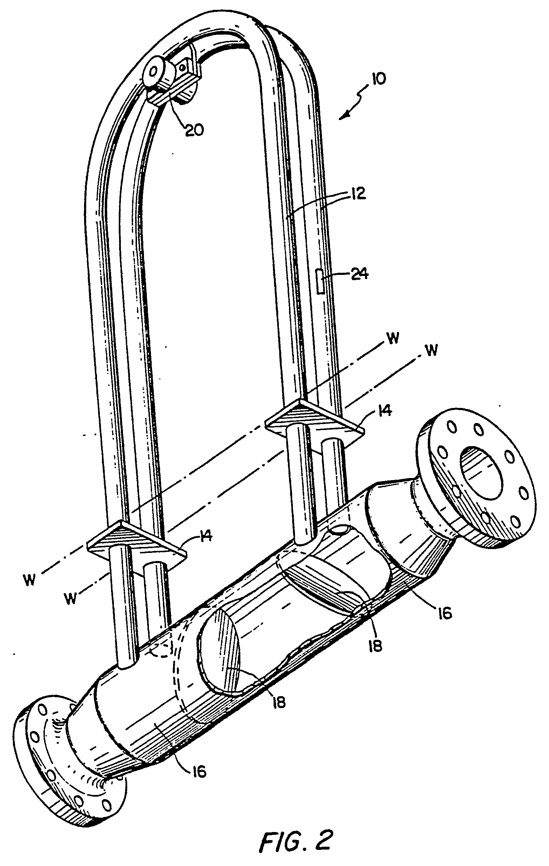

A densimeter, as generally designated by numeral 10, with two vibrating tubes 12, for which the electronic circuit of the present invention can be used, is shown in Fig. 2. The configuration of densimeter 10 includes the supports 14, the plenums formed by manifolds 16 and end plates 18, and the electromagnetic drive and sensor mechanism 20. Such a configuration provides for parallel fluid flow through the two tubes 12, which act as the tines of a tuning fork when vibrated. A detailed description of the construction and fluid dynamics associated with this configuration is set forth in detail in published European patent application EP—A—0109218.

As is known in the art, electromagnetic drive and sensor mechanism 20 can consist of such known means as a magnet fixed to one of the vibrating tubes 12, and a drive coil along with a sense coil 22 fixed to the other of the vibrating tubes 12. As is also known in the art, by passing an oscillating electrical current through the drive coil the two tubes 12 can be sinusoidally driven about their respective bending axis, W—W, at their common resonant angular velocity of oscillation. Such oscillation will result in the tubes operating as the two tines of a tuning fork. As the tubes 12 resonantly oscillate an electrical signal correlating to the relative movement of tubes 12 is generated by the magnet and sense coil 22.

Irrespective of whether a single or multiple oscillating container structure is used, the solution for the equation of motion for a resonantly oscillating spring mounted mass is the same, and is accordingly applicable to the quantitative description of the mechanics of an oscillating container densimeter. This solution is

$$\omega = \sqrt{K(t)/M} \qquad \text{(equation 1)}$$

where

$\omega$ is the angular velocity of oscillation for the resonantly oscillating spring mounted mass,

$K(t)$ is the spring constant about the oscillation axis and is a function of temperature t, and

M is the mass affixed to the spring.

For a densimeter as shown in Fig. 2 the mass M is the sum of the masses of vibrating tubes 12, which can be identified as $M_T$, plus the mass of the substance flowing through the vibrating tubes 12, which can be identified as $M_F$. Therefore,

$$M = M_T + M_F$$

The mass of the substance flowing through the vibrating tubes 12 is equal to the product of the density, $\rho$, of the substance times the internal volume, $V_o$, of the vibrating tubes 12.

$$M_F = \rho V_o$$

Substituting the last relation into equation 1 and solving for density results in the following:

$$\rho = \frac{K(t)}{4\pi^2 V_o} T^2 - \frac{M_T}{V_o} \qquad \text{(equation 2)}$$

Where T is the period of oscillation of the resonantly vibrating tubes 12.

Noting that on the right side of equation 2 all of the quantities except for the period of oscillation T, and the spring constant, $K(t)$, which is a function of temperature, are constants permits rewriting of equation 2 in the following useful format.

$$\rho = \frac{K(t)T^2}{K_1} - K_2 \qquad \text{(equation 3)}$$

where $K_1$ and $K_2$ are constants.

Thus processing the signals from sense coil 22 and temperature variable resistor 24 in a circuit according to the present invention which performs calculations according to equation 3 provides for a direct readout of accurate density measurements of the substances flowing through tubes 12.

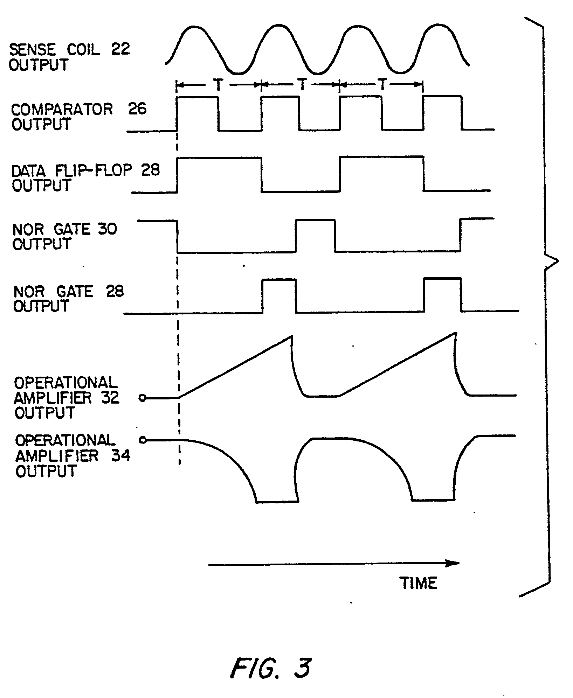

The circuit of the present invention operates as follows, initially switches S1 and S3 are both closed

4

thereby holding integrator capacitors C1 and C2 in a fully discharged condition while switches S2 and S4 are both initially open. As shown in Figs. 1 and 3, the output of sense coil 22 is fed into comparator 26 which provides a square wave output having a period equal to that of the oscillating tubes 12. By feeding the output of comparator 26 into data flip-flop 28 and NOR gate 30, switches S1 and S3 are opened and switch S2 is closed when tubes 12 reach their maximum displacements from their mid-planes of oscillation. Integrator capacitor C1 is then charged due to the current supplied from reference voltage source $V_1$ through resistor R1. Accordingly, the output of amplifier 32 is a linear ramp, as shown in Fig. 3, having a magnitude proportional to time. Now integrator capacitor C2 charges due to the increasing current through resistor R2. The output of amplifier 34, as shown in Fig. 3, is a parabolically decreasing voltage proportional to time squared. At the end of a complete cycle of oscillation of vibrating tubes 12, the combination of sense coil 22, comparator 26, data flip-flop 28, inverter 36, NOR gates 30 and 38 provides control signals, as shown in Fig. 3, which open switch S2, thus holding the charge on integrator capacitor C2, and close switch S4 to transfer the output voltage of amplifier 34 to hold capacitor C3. During the next cycle of oscillation of tubes 12 a time measurement is not made, but as shown in Fig. 3 switch S4 opens, and switches S1 and S3 close to reinitiate the circuitry for the next measurement cycle.

As explained above the voltage retained on hold capacitor C3 is proportional to the square of the period of oscillation of the resonantly vibrating tubes 12. This voltage, $V_H$, can be calculated using the following relationship:

$$V_H = \frac{V_1}{2\ R1\ C1\ R2\ C2} T^2 \qquad \text{(equation 4)}$$

The circuitry which modifies $V_H$ so as to reflect changes due to temperature fluctuations includes bridge 42 and amplifier 44. A 100 ohm platinum resistance thermometer has been used for temperature variable resistor 24. This temperature variable resistor 24 is attached to one of tubes 12 by methods known in the art to sense temperature changes. The resistance changes caused by temperature fluctuations are measured by bridge 42 and amplified by amplifier 44 to produce a substantially linear increasing voltage as the temperature of temperature variable resistor 24 is increased. The voltage $V_2$, therefore supplies a temperature controlled current to the summing node 46 to modify $V_H$ as follows:

$$V_H = \left(\frac{V_1}{R1} - \frac{V_2}{R3}\right)\ \left(\frac{T_2}{2R2\ C1\ C2}\right) = K(temp)T^2$$

where K(temp) is effectively a temperature dependent factor.

Finally, the combination of amplifiers 48 and 50, variable resistors R7 and R5, and resistor R6 is used to obtain a voltage whose transfer function takes the form of equation 3. Amplifier 48 provides a buffer for hold capacitor C3, and a current proportional to $V_H$ is summed with a current set by variable resistor R5 and constant voltage $V_3$. This current is amplified by amplifier 50 to provide voltage $V_\rho$ which can be calculated using the following relationship.

$$V_\rho = \left(\frac{K(temp)T^2}{R6} - \frac{V_3}{R5}\right)R7$$

Thus, the output voltage, $V_\rho$, can be scaled by means of resistors R5 and R7 to produce a voltage equivalent to the density or specific gravity of the substance flowing through the resonantly oscillating tubes 12. The output voltage, $V_\rho$ can be measured using known digital voltmeter circuitry.

Typical components employed in one embodiment of the invention are listed in the following table, though of course numerous other components and values would be operable in equivalent and variant designs.

# EP 0 130 003 B1

### Component Table

| | |
|---|---|
| Comparator 26 | National Semiconductor, No. LM111DE |
| Invertor 36 | RCA, Quad NOR Gate, No. CD4001BE |
| Nor Gates 30 and 38 | RCA, Quad NOR Gate, No. CD4001BE |
| Flip-Flop 28 | RCA, Dual Data Flip-Flop, No. CD4013BE |
| Resistor 24 | Temperature Variable MINCO, 100 ohm platinum wire resistor |
| Amplifier 44 | PMI, Operational Amplifier, No. OP-07DZ |
| Resistor R2 and R3 | 100k ohm |
| Resistor R1 | 64.9k ohm |
| Amplifier 32 | PMI, Operational Amplifier, No. OP-07DZ |
| Capacitor C1 and C3 | 0.47 micro farad |
| Capacitor C2 | 0.1 micro farad |
| Switches S1, S2, S3 and S4 | PMI, Quad Bilateral Switch, No. SWO2FQ |
| Amplifiers 34, 48 and 50 | National Semiconductor, Quad Operational Amplifier, No. LM224 |
| Resistors R5 and R7 | Variable 50k ohm resistors |
| Resistor R6 | 10k ohm |

The electronic circuit shown in Fig. 1 has been built and tested using a densimeter having twin 6.35 mm (1/4 inch) 316L stainless steel tubes. To test the accuracy of the electronic circuitry the densimeter tubes were filled with distilled water, and the densimeter was then placed in an oven. At the various temperatures at which data were taken the temperature was allowed to stabilize for thirty minutes before the following data was recorded.

### TABLE I

| Temperature (°C) | Circuit readout | Published specific gravity |
|---|---|---|
| 24.5 | 1.00 | 0.997 |
| 28.9 | 1.00 | 0.996 |
| 58.3 | 0.99—0.98 | 0.983 |
| 90.6 | 0.97—0.96 | 0.965 |

This same densimeter equipment was also tested by calibrating the circuitry at zero with air in the tubes, and at 1.00 with distilled water in the tubes. Three different fluids of known specific gravity were then used to determine the accuracy of the readings provided by the circuitry of the present invention.

### TABLE II

| Fluid | Circuit readout | Published specific gravity |
|---|---|---|
| Isopropanol Alcohol | 0.79 | 0.7855 |
| Tetrabromoethane | 2.96 | 2.9656 |
| Distilled water | 0.99 | 0.9982 |

## Claims

1. An electronic circuit for determining the density of substances flowing through a resonantly oscillating container (10) from the mass of said substances which comprises:

A) a temperature to electric transducer (24) electrically connected to an electric measurement circuit (42, 44) for generating a first electrical signal ($V_2$) having a magnitude determined by the temperature of said container (10);

B) a mechanical to electrical transducer (22) for generating a second electrical signal having a magnitude determined by the measured period of oscillation of said container (10); and

C) an electronic integrator circuit (32, C1, 34, C2), the output signal ($V_H$) of which is proportional to the square of said period of oscillation of said container,

6

characterised in that the output of said electric measurement circuit (42, 44) is electrically connected to the input of said electronic integrator circuit (32, C1, 34, C2) and the output of said mechanical to electrical transducer (22) is electrically connected to an electronic logic circuit (26, 28, 30, 36, 38, S1, S2, S3, S4) the output of which electronic logic circuit (26, 28, 30, 36, 38, S1, S2, S3, S4) is in turn electrically connected to said electronic integrator circuit (32, C1, 34, C2) and the output signals of which act to control the time of integration of said electronic integrator circuit (32, C1, 34, C2) so that said output signal ($V_H$) is modified by said first electrical signal ($V_2$), whereby the density of said substances flowing through said container is determined from said output signal ($V_H$).

2. An electronic circuit as set forth in claim 1 in which said temperature to electric transducer is a temperature variable resistor (24).

3. An electronic circuit as set forth in claim 2 in which said electric measurement circuit (42, 44) for generating said first electrical signal ($V_2$) includes a bridge circuit (42) one branch of which is said temperature variable resistor (24).

4. An electronic circuit as set forth in claim 1 in which said mechanical to electrical transducer (22) is a coil and magnet with said coil and magnet moveable relative to each other in coincidence with the oscillation of said container (10).

5. An electronic circuit as set forth in claim 1 in which said electronic integrator circuit (32, C1, 34, C2) includes two electronic integrator devices connected in series (32, C1, and 34, C2).

6. A method of determining the density of substances flowing through a resonantly ocillating container (10) from the mass of said substances which comprises separately measuring the temperature of said container (10) and the period of oscillation of said container (10), characterised in that

A) a first electrical signal ($V_2$) is generated from the measured temperature of said container (10) and input to an electronic integrator circuit (32, C1, 34, C2);

B) a second electrical signal is generated from the measured period of oscillation of said container (10) and input via an electronic logic circuit (26, 28, 30, 36, 38, S1, S2, S3, S4) to said electronic integrator circuit (32, C1, 34, C2);

C) the time of integration of said electronic integrator circuit (32, C1, 34, C2) is controlled by said electronic logic circuit (26, 28, 30, 36, 38, S1, S2, S3, S4) so that the output signal ($V_H$) of said electronic integrator circuit represents the square of said period of oscillation of said container as modified by said first electrical signal ($V_2$), whereby the density of said substances is determined from said output signal ($V_H$).

7. A method of determining density as set forth in claim 6 in which the temperature of said container (10) is measured with a temperature variable resistor (24) connected to a branch of a bridge circuit (42).

8. A method of determining density as set forth in claim 6 in which said first electrical signal ($V_2$) and the output from said electronic logic circuit (26, 28, 30, 36, 38, S1, S2, S3, S4) are both input to the electronic integrator circuit (32, C1, 34, C2) which comprises a first electronic integrator device (32, C1) serially connected to a second electronic integrator device (34, C2).

**Patentansprüche**

1. Elektronische Schaltungsanordnung zum Bestimmen der Dichte von Substanzen, die durch ein in Resonanz schwingendes Behältnis (10) strömen, aus der Masse dieser Substanzen, umfassend:

A) einen elektrischen Temperaturtransducer (24), der elektrisch an einen elektrischen Meßkreis (42, 44) zum Erzeugen eines ersten elektrischen Signals ($V_2$) angeschlossen ist, dessen Größe durch die Temperatur des Behältnisses (10) bestimmt ist;

B) einen elektro-mechanischen Transducer (22) zum Erzeugen eines zweiten Signals einer Größe, welche aus der gemessenen Schwingungsperiode des Behältnisses (10) bestimmt wird, und

C) einen elektronischen Integrator (32, C1, 34, C2), dessen Ausgangssignal ($V_H$) proportional zum Quadrat der Schwingungsperiode des Behältnisses ist,

dadurch gekennzeichnet, daß der Ausgang des elektrischen Meßkreises (42, 44) mit dem Ausgang des elektronischen Integrators (32, C1, 34, C2) verbunden ist und daß der Ausgang des elektrischen Temperaturtransducers (22) elektrisch mit einem elektronischen Logik-Schaltkreis (26, 28, 30, 36, 38, S1, S2, S3, S4) verbunden ist, dessen Ausgang seinerseits mit dem elektronischen Integrator (32, C1, 34, C2) verbunden ist und dessen Ausgangssignale die Integrationszeit des elektronischen Integrators (32, C1, 34, C2) steuern, so daß das Ausgangssignal ($V_H$) durch das erste elektrische Signal ($V_2$) verändert wird, womit die Dichte der Substanzen, die durch das Behältnis strömen, aus diesem Ausgangssignal ($V_H$) bestimmt wird.

2. Elektronische Schaltungsanordnung nach Anspruch 1, dadurch gekennzeichnet, daß der elektrische Temperaturtransducer ein temperaturabhängiger Widerstand (24) ist.

3. Elektronische Schaltungsanordnung nach Anspruch 2, dadurch gekennzeichnet, daß der elektrische Meßkreis (42, 44) zum Erzeugen des ersten elektrischen Siganls ($V_2$) eine Brückenschaltung (42) umfaßt, deren einer Zweig der temperaturabhängige Widerstand (24) ist.

4. Elektronische Schaltungsanordnung nach Anspruch 1, dadurch gekennzeichnet, daß der elektromechanische Temperaturtransducer (22) eine Spulen-/Magnetanordnung ist, in der die Spule und der Magnet gegeneinander in Übereinstimmung mit der Schwingung des Behältnisses (10) beweglich sind.

5. Elektronische Schaltungsanordnung nach Anspruch 1, dadurch gekennzeichnet, daß der elektronische Integrator (32, C1, 34, C2) zwei elektronische Integratoreinrichtungen (32, C1 und 34, C2) umfaßt, die in Reihe geschaltet sind.

6. Verfahren zum Bestimmen der Dichte von Substanten, die durch ein in Resonanz schwingendes Behältnis (10) strömen, aus der Masse dieser Substanzen, welche auf getrennten Messungen der Temperatur des Behältnisses (10) und der Schwingungsperiode des Behältnisses (10), beruht, dadurch gekennzeichnet, daß

A) ein erstes elektrisches Signal ($V_2$) aus der gemessenen Temperatur des Behältnisses (10) erzeugt wird und in einen elektronischen Integrator (32, C1, 34, C2) eingespeist wird;

B) ein zweites elektrisches Signal aus der gemessenen Schwingungsperiode des Behältnisses (10) erzeugt wird und über einen elektrischen Logik-Schaltkreis (26, 28, 30, 36, 38, S1, S2, S3, S4) in den elektronischen Integrator (32, C1, 34, C2) eingespeist wird;

C) die Integrationszeit des elektronischen Integrators (32, C1, 34, C2) durch den elektronischen Logik-Schaltkreis (26, 28, 30, 36, 38, S1, S2, S3, S4) gesteuert wird, so daß das Ausgangssignal ($V_H$) des elektronischen Integrators das Quadrat der Schwingungsperiode des Behältnisses, verändert durch das erste elektrische Signal, ($V_2$) darstellt, wodurch die Dichte der Substanzen aus diesem Ausgangssignal ($V_H$) bestimmt wird.

7. Verfahren zum Bestimmen der Dichte gemäß Anspruch 6, dadurch gekennzeichnet, daß die Temperatur des Behältnisses (10) mit einem temperaturabhängigen Widerstand (24), der an einen Zweig einer Brückenschaltung (42) angeschlossen ist, gemessen wird.

8. Verfahren zum Bestimmen der Dichte gemäß Anspruch 6, dadurch gekennzeichnet, daß das erste elektrische Sigal ($V_2$) und der Ausgang des ersten elektronischen Logik-Schaltkreises (26, 28, 30, 36, 38, S1, S2, S3, S4) beide in den elektronischen Integrator (32, C1, 34, C2) eingespeist werden, der eine erste elektronische Integratoreinrichtung (32, C1), die in Serie an eine zweite elektronische Integratoreinrichtung (34, C2) angeschlossen ist, umfaßt.

**Revendications**

1. Circuit électronique de détermination de la densité de substances circulant dans un récipient (10) oscillant à la résonance à partir de la masse desdites substances et qui comporte:

A) un transducteur de température en signal électrique (24) connecté électriquement à un circuit électrique de mesure (42, 44) pour produire un premier signal électrique ($V_2$) dont l'amplitude est déterminée par la température dudit récipient (10);

B) un transducteur mécanique-électrique (22) qui produit un second signal électrique dont l'amplitude est déterminée par la période mesurée d'oscillation dudit récipient (10); et

C) un circuit intégrateur électronique (32, C1, 34, C2) dont le signal de sortie ($V_H$) est proportionnel au carré de ladite période d'oscillation dudit récipient,

caractérisé en ce que la sortie dudit circuit de mesure électrique (42, 44) est connectée électriquement à l'entrée dudit circuit intégrateur électronique (32, C1, 34, C2) et que la sortie dudit transducteur mécanique-électrique (22) est connectée électriquement à un circuit logique électronique (26, 28, 30, 36, 38, S1, S2, S3, S4), la sortie dudit circuit logique électronique (26, 28, 30, 36, 38, S1, S2, S3, S4) étant à son tour connectée électriquement audit circuit intégrateur électronique (32, C1, 34, C2) et dont les signaux de sortie ont pour fonction de commander le temps d'intégration dudit circuit intégrateur électronique (32, C1, 34, C2) de manière que ledit signal de sortie ($V_H$) soit modifié par ledit signal électrique ($V_2$), afin que la densité desdites substances qui circulent dans ledit récipient soient déterminées à partir dudit signal de sortie ($V_H$).

2. Circuit électronique selon la revendication 1, dans lequel ledit transducteur de température en signal électrique est une résistance variable en température (24).

3. Circuit électronique selon la revendication 2, dans lequel ledit circuit de mesure électrique (42, 44) qui produit ledit premier signal électrique ($V_2$) comporte un circuit en pont (42) sont une branche est ladite résistance variable en température (24).

4. Circuit électronique selon la revendication 1, dans lequel ledit transducteur mécanique-électrique (22) est une bobine et un aimant avec ladite bobine et ledit aimant mobiles l'un par rapport à l'autre en coïncidence avec l'oscillation dudit récipient (10).

5. Circuit électronique selon la revendication 1, dans lequel ledit circuit intégrateur électronique (32, C1, 34, C2) comporte deux dispositifs intégrateurs électroniques connectés en série (32, C1) et (34, C2).

6. Procédé de détermination de la densité de substances circulant dans un récipient (10) oscillant à la résonance à partir de la masse desdites substances et qui consiste à mesurer séparément la température dudit récipient (10) et la période d'oscillation dudit récipient (10), caractérisé en ce que

A) un premier signal électrique ($V_2$) est produit à partir de la température mesurée dudit récipient (10) et appliqué à un circuit intégrateur électronique (32, C1, 34, C2);

B) un second signal électrique est produit à partir de la période mesurée d'oscillation dudit récipient (10) et appliqué, par un circuit logique électronique (26, 28, 30, 36, 38, S1, S2, S3, S4) audit circuit intégrateur électronique (32, C1, 34, C2);

C) le temps d'intégration dudit circuit intégrateur électronique (32, C1, 34, C2) est commandé par ledit circuit logique électronique (26, 28, 30, 36, 38, S1, S2, S3, S4) de manière que le signal de sortie ($V_H$) dudit circuit intégrateur électronique représente le carré de ladite période d'oscillation dudit récipient, modifiée par ledit premier signal électrique ($V_2$) de manière que la densité desdites substances soit déterminée à partir dudit signal de sortie ($V_H$).

7. Procédé de détermination de densité selon la revendication 6, dans lequel la température dudit récipient (10) est mesurée avec une résistance (24) variable en température connectée à une branche d'un circuit en pont (42).

8. Procédé de détermination de densité selon la revendication 6, dans lequel ledit premier signal électrique ($V_2$) et la sortie dudit circuit logique électronique (26, 28, 30, 36, 38, S1, S2, S3, S4) sont tous deux appliqués au circuit intégrateur électronique (32, C1, 34, C2) qui comporte un premier dispositif intégrateur électronique (32, C1) connecté en série avec un second dispositif intégrateur électronique (34, C2).

FIG. 1

FIG. 2

2

SENSE COIL 22
OUTPUT

COMPARATOR 26
OUTPUT

DATA FLIP-FLOP 28
OUTPUT

NOR GATE 30
OUTPUT

NOR GATE 28
OUTPUT

OPERATIONAL
AMPLIFIER 32
OUTPUT

OPERATIONAL
AMPLIFIER 34
OUTPUT

TIME

*FIG. 3*